# EUROPEAN PATENT SPECIFICATION

(11) **EP 4 011 476 B1**
(45) Date of publication and mention of the grant of the patent: **07.06.2023**
(21) Application number: 21212212.1
(22) Date of filing: 03.12.2021
(51) Int. Cl.: B01D 29/35, B01D 35/06, B01D 35/153, B01D 35/157, F16K 1/04

(54) **DEVICE FOR FILTERING A LIQUID, PARTICULARLY FOR HYDRAULIC CIRCUITS OF HEATING SYSTEMS**
VORRICHTUNG ZUM FILTERN EINER FLÜSSIGKEIT, INSBESONDERE FÜR HYDRAULIKKREISE VON HEIZUNGSSYSTEMEN
DISPOSITIF DE FILTRAGE D'UN LIQUIDE POUR CIRCUITS HYDRAULIQUES D'INSTALLATIONS DE CHAUFFAGE

(30) Priority: 11.12.2020 IT 202000030530
(43) Date of publication of application: 15.06.2022
(73) Proprietor: Euroacque S.r.l., 40057 Granarolo dell'Emilia (BO) (IT)
(72) Inventor: BORDI, Paolo, 29122 Piacenza PC (IT)
(74) Representative: Rondano, Davide

(56) References cited:
- EP-A1- 0 907 046
- WO-A1-2013/045165
- WO-A1-2018/207083
- DE-A1- 1 923 060

## Description

### Technical field of the invention

The present invention relates generally to devices for filtering liquids, in particular for filtering water flowing in hydraulic circuits of heating systems. More specifically, though not necessarily, the present invention relates to a magnetic type filtering device, i.e. a device which also uses a magnetic filtering action in addition to a mechanical filtering action.

### Background of the invention

In the field of water filtration devices, devices are known, also called dirt separators, which are typically used for removing impurities such as sludge and ferrous residues from the water flowing in hydraulic circuits of heating systems, for example in boilers for domestic use attached to radiators, radiant panels, or the like. Such filtration devices are known for example from WO2018/207083 A, DE1923060 A, EP0907046A and WO2013/045165 A.

A device for filtering a liquid generally comprises a main body, or head, made of a metal or plastic material in which inlet and outlet ducts are provided for connection to a line pipe, and a cup-shaped casing in which a filtering cartridge having, for example, a cylindrical shape is housed. Coaxially to the filtering cartridge, which is typically made of a plastic or metal mesh, magnets may be housed to help retain ferrous impurities.

The cup-shaped casing is fixed to the main body in a removable manner, for example by means of a threaded ring nut associated with a flange provided with a sealing element. A flow of water entering the inlet duct in the main body is diverted to the cup-shaped casing where it passes through the filtering cartridge which retains the impurities with the help of the magnets, if present. The filtered water flowing out of the cup-shaped casing goes back into the main body and exits the device through the outlet duct.

A liquid filtration device comprising valve means for controlling the flow of water entering the main body of the device through an inlet duct is known from WO2018/207083. Such valve means comprise a shutter member, such as a plate, movable between a closed position and an open position, in which it prevents and allows the flow of incoming water, respectively. The shutter member is carried by a rod which is movable by translation along the direction of its longitudinal axis. The translational movement of the rod, along with the shutter member, between the closed position and the open position is controlled by the user by turning a knob. This known device is provided with a sealing system comprising a gasket arranged around the translating rod to prevent water from seeping outwards. However, this sealing system is not very satisfactory in terms of lifespan: the gasket around the rod may in fact deteriorate due to the translational movement of the rod, since the rod carries with it impurities from the inside the main body.

### Summary of the invention

It is an object of the present invention to provide a device for filtering liquids which allows to overcome the above-mentioned drawbacks of the prior art.

This and other objects are fully achieved by virtue of a device as specified in the appended independent claim 1.

Preferred features of the present invention form the subject-matter of the dependent claims.

In summary, the invention is based on the idea of providing, for the control of the displacement of the shutter member between the closed position and the open position, actuator means comprising a rod which is locked with respect to rotation about an axis of translation, coinciding with its longitudinal axis, and has, at a first end thereof facing away from the shutter member, a threaded cavity in which a threaded portion of a shaft is engaged, said shaft being drivingly connected for rotation with a knob operable by the user, as well as on the idea of providing sealing means arranged on said shaft. Thanks to the fact that the sealing means are provided on the rotating shaft, instead of on the translating rod, such means are less subject to wear and therefore maintain their effectiveness for a very long period of time.

### Brief description of the drawings

Further features and advantages of the present invention will be apparent from the following detailed description of some embodiments, given purely by way of non-limiting example with reference to the Figures of the accompanying drawings, wherein:
- Figure 1 is a sectional view showing a device for filtering a liquid according to a first embodiment of the present invention, with the shutter member in a closed position;
- Figure 2 is a sectional view of the device of Figure 1, with the shutter member in an open position;
- Figure 3 is an exploded view of the device of Figure 1;
- Figure 4 is a partial sectional view of the actuating means of the device of Figure 1; and
- Figure 5 is a sectional view of a device for filtering a liquid according to a second embodiment of the present invention.

### Detailed description

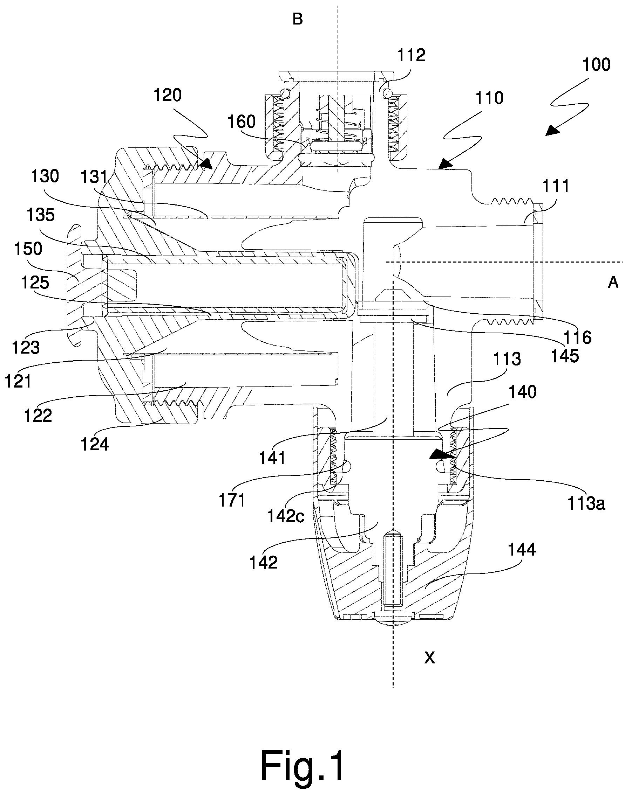

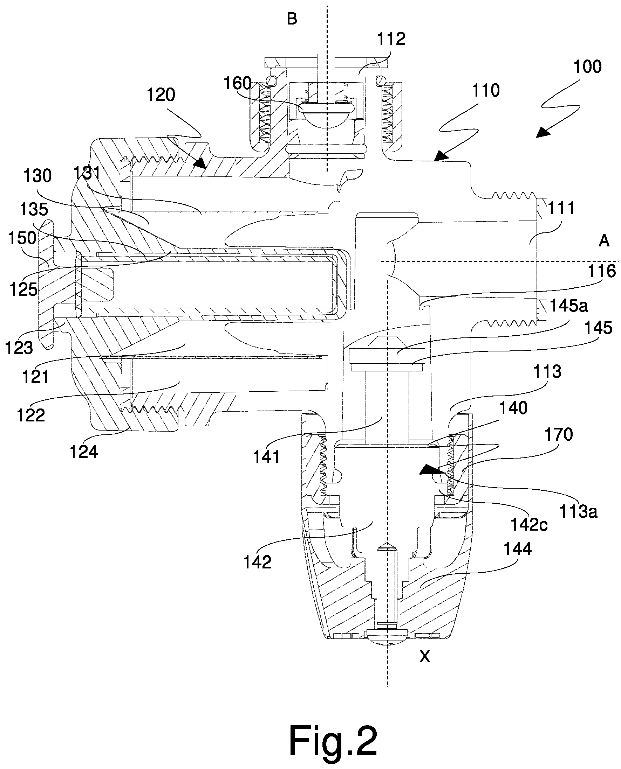

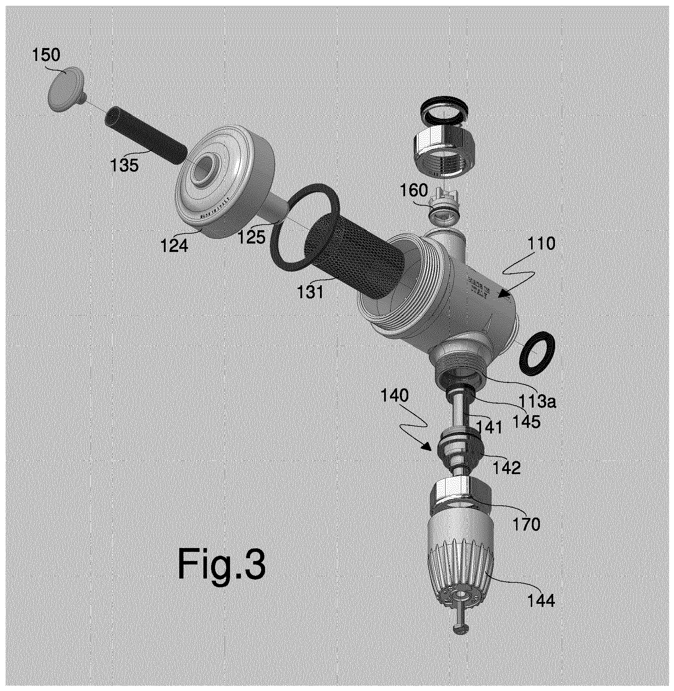

With reference first to Figures 1 to 3, a device for filtering a liquid, particularly for filtering water in hydraulic circuits of heating systems, is generally indicated 100 and comprises:
- a main body 110, having a first duct 111 for the inlet of the liquid to be filtered and a second duct 112 for the outlet of the filtered liquid, the first duct 111 and the second duct 112 extending along a first longitudinal axis A and along a second longitudinal axis B, respectively;
- a filter cartridge 130;
- valve means for controlling the flow of the liquid entering the main body 110 through the first duct 111; and
- actuator means 140 for controlling said valve means.

According to an embodiment, the second longitudinal axis B is arranged at 90° to the first longitudinal axis A. However, this arrangement is not essential for the purposes of the present invention.

The main body 110 further comprises a hollow cylindrical portion 120 which is closed by a lid 124 and is configured to house the filter cartridge 130. Said filter cartridge 130 divides a containment volume defined by the hollow cylindrical portion 120 into a first volume 121, in fluid communication with the first duct 111, and a second volume 122, in fluid communication with the second duct 112. The first volume 121 and the second volume 122 are in turn in fluid communication with each other through the filter cartridge 130.

The valve means are configured to control the flow of the liquid from the first duct 111 to the first volume 121. Such means comprise a valve seat 116, disposed in the fluid path between the first duct 111 and the first volume 121, and a shutter member 145 movable with respect to the valve seat 116 between a closed position and an open position, in which it interrupts and allows, respectively, the flow of the liquid from the first duct 111 to the first volume 121 through the valve seat 116. The shutter member 145 is formed for example by a plate, preferably provided with a sealing gasket 145a.

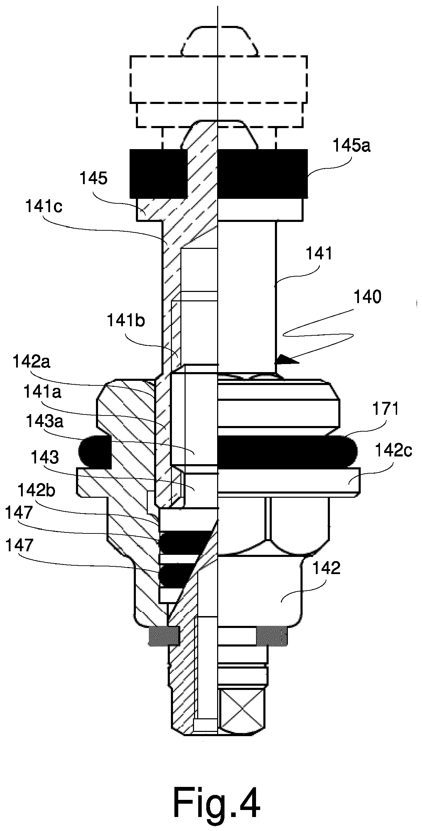

The actuator means 140 are configured to control the movement of the shutter member 145 between the above-mentioned closed and open positions. With reference also to Figure 4, such means comprise a rod 141, which is operatively associated with the shutter member 145 and shiftable along an axis X coinciding with its longitudinal axis, an actuator body 142, which is mounted on the main body 110 and guides the rod 141 in its translational movement along the axis X, and a knob 144, which is configured to be driven into rotation by a user to move the rod 141.

According to the embodiment of Figures 1 to 4, the shutter member 145 is constrained to the rod 141 (more specifically, at an upper end portion thereof, indicated 141c) so as to be drivingly connected for translation therewith. Advantageously, the rod 141 has, at an end portion 141a thereof facing away from the shutter member 145 (in the present case, the lower end portion), a threaded cavity 141b, i.e. a cavity inside the end portion 141a a portion of whose inner surface is threaded, the axis of the threading being substantially coincident with the axis X of the rod 141. The end portion 141a of the rod 141 is slidably received into a polygonal seat 142a of the actuator body 142 and has a cross-section with a polygonal shape corresponding to that of the seat 142a, in such a manner that the rod 141 is prevented from rotating relative to the actuator body 142 about the axis X.

The actuator means 140 further comprise a shaft 143 having at an end thereof facing away from the knob 144 (in the present case the upper end) a threaded portion 143a which engages in the threaded cavity 141b of the rod 141. The shaft 143 is drivingly connected for rotation with the knob 144, in such a manner that the rotational movement of the knob 144, and therefore of the shaft 141, in one direction or the other, about the axis X is converted into a translational movement of the rod 141, in one direction or the other, along the axis X. The shaft 143 is supported for rotation by the actuator body 142, namely in a cylindrical cavity 142b thereof. The actuator body 142 is provided internally with first sealing means for ensuring sealing between the shaft 143 and the surface of the cylindrical cavity 142b. Preferably, such first sealing means comprise two sealing gaskets 147, for example two O-rings, arranged axially spaced apart from each other on the shaft 143.

In an embodiment, the main body 110 comprises a second cylindrical portion 113 which extends along the axis of translation X and has a threaded end 113a defining a mouth. The actuator body 142 is partially inserted through said mouth and constrained to the main body 110. More particularly, a clamping ring nut (or cap) 170 is configured to screw onto the threaded end 113a of the second cylindrical portion 113 so as to clamp a flange portion 142c of the actuator body 142, having a diameter greater than the inner diameter of the cylindrical portion 113, against said threaded end 113a. The actuator body 142 is thus blocked with respect to the main body 110. Second sealing means, comprising for example an O-ring seal 171 arranged around the actuator body 142, preferably resting on the upper face of the flange portion 142c, ensure sealing between the second cylindrical portion 113 and the actuator body 142. The ring nut 170 is advantageously made of brass, which makes it possible to avoid the formation of cracks or fissures that can instead occur in the filtering devices of the prior art, in which the male threaded portion of the actuator body is screwed into a female threaded portion of the main body of the device which, being typically made of a plastic material, may crack as a result of the screwing of the actuator body into it, thus creating problems with the sealing of the device.

As mentioned, in a first embodiment of the invention (Figures 1-4) the shutter member 145 is integral with the rod 141 in the translation movement along the axis X. In this way, the action of rotation of the knob 144 by a user is converted, due to the engagement between the threaded portion 143a of the shaft 143 in the threaded cavity 141b of the rod 141 and to the rotational locking of the rod 141, into a translation movement of the rod 141, and hence of the shutter member 145, along the axis X, the amount of which is directly proportional to the angle of rotation of the knob 144.

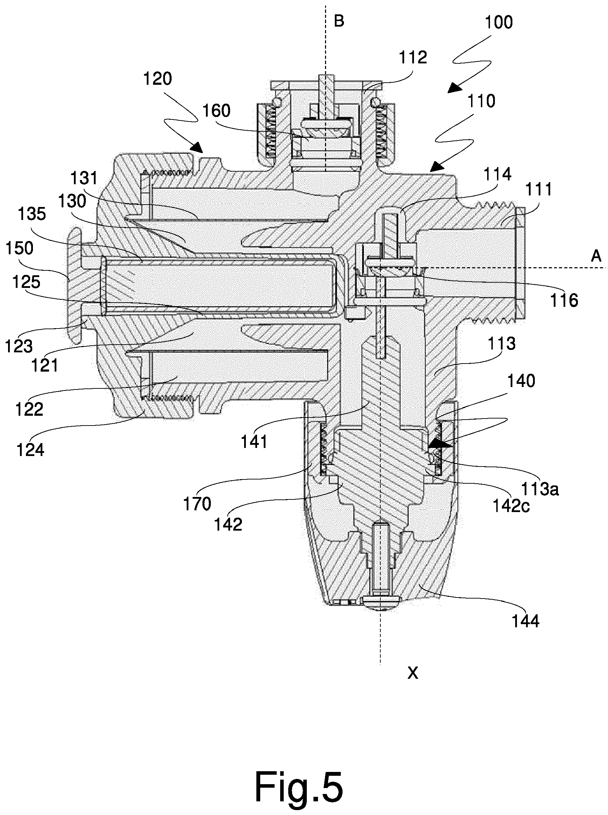

Referring now to Figure 5, in which parts and elements identical or corresponding to those of the preceding Figures are indicated with the same reference numerals, in a second embodiment of the present invention the shutter member 145 is separate from the rod 141 and is normally held by elastic means (not shown) against the valve seat 116 to prevent the flow of the liquid from the first duct 111 to the first volume 121. The rod 141 is in this case configured to push the shutter member 145 away from the valve seat 116 against the action of the elastic means. Preferably, the shutter member 145 and the rod 141 are arranged on opposite sides of the valve seat 116. More particularly, the elastic means are preferably housed in a special chamber 114 of the main body 110. With reference to Figures 1-3 and 5, in both the first embodiment and the second embodiment of the device 100 the filter cartridge 130 comprises a mesh 131 which is arranged along a coaxial cylindrical surface inside the hollow cylindrical portion 120 and is configured to filter the water flowing from the first volume 121 to the second volume 122. Preferably, the filter cartridge 130 further comprises one or more magnetic inserts 135 configured to attract fine ferrous-type particulate present in the water flowing through the first volume 121. More particularly, the lid 124 includes a cylindrical cup-shaped container 125, coaxial with the hollow cylindrical portion 120 of the main body 110, having an opening in the region of the lid 124. The cylindrical cup-shaped container 125 defines a containment volume for the one or more magnetic inserts 135. A cap 150 closes the opening of the cylindrical cup-shaped container 125 at a hollow cylindrical extension 123 protruding from the lid 124 to the outside of the device 100.

According to a further advantageous aspect of the present invention, which may be provided both in the first embodiment and in the second embodiment illustrated above, the device 100 further comprises a check valve 160 arranged in the second duct 112 to prevent the flow of liquid entering through said duct and thereby allow flow through said duct only in the direction exiting the main body 110.

The present invention has been described with reference to preferred embodiments thereof. It will be understood that there may be further embodiments sharing the same inventive concept, as defined by the scope of protection of the appended claims.

## Claims

1. Device (100) for filtering a liquid, particularly for filtering water in hydraulic circuits of heating systems, comprising:
- a main body (110) having a first duct (111) for the inlet of the liquid to be filtered and a second duct (112) for the outlet of the filtered liquid, said main body (110) further comprising a hollow cylindrical portion (120);
- a filter cartridge (130) housed in said hollow cylindrical portion (120) so as to divide a containment volume defined by said hollow cylindrical portion (120) into a first volume (121), in fluid communication with said first duct (111), and a second volume (122), in fluid communication with said second duct (112);
- valve means (116, 145) for controlling the flow of the liquid from said first duct (111) to said first volume (121), said valve means (116, 145) comprising a valve seat (116) interposed between said first duct (111) and said first volume (121) and a shutter member (145) movable with respect to said valve seat (116) between a closed position and an open position, in which it interrupts and allows, respectively, the flow of the liquid from said first duct (111) to said first volume (121) through said valve seat (116);
- actuator means (140) for controlling the movement of the shutter member (145) between said closed position and said open position, wherein said actuator means (140) comprise a rod (141), which is operatively associated with the shutter member (145) and is shiftable along an axis of translation (X) coinciding with its longitudinal axis, an actuator body (142), which is mounted on the main body (110) and is configured to guide said rod (141) in its translational movement of along said axis of translation (X), and a knob (144) configured to be driven into rotation by a user to move said rod (141), and a shaft (143) drivingly connected for rotation with said knob (144); and
- first sealing means (147) arranged inside the actuator body (142);
**characterized**
**in that** said rod (141) is locked with respect to rotation around said axis of translation (X) and has, at a first end portion (141a) thereof facing away from the shutter member (145), a threaded cavity (141b);
**in that** the shaft (143) comprises a threaded portion (143a) engaging in said threaded cavity (141b) of the rod (141), in such a way that the rotational movement of the knob (144), and therefore of the shaft (143), in one direction or the other, is converted into a translational movement of the rod (141), in one direction or the other, along said axis of translation (X); and
**in that** said first sealing means (147) comprise at least one gasket mounted on said shaft (143).

2. Device according to claim 1, wherein said first sealing means (147) comprise two gaskets, in particular two O-rings, arranged on said shaft (143) so as to be axially spaced apart from each other.

3. Device according to claim 1 or claim 2, wherein said first end portion (141a) of the rod (141) has a polygonal cross section slidably housed inside a corresponding polygonal seat (142a) in the actuator body (142) so as to prevent the rod (141) from rotating relative to the actuator body (142).

4. Device according to any one of the preceding claims, wherein said shutter member (145) is drivingly connected with said rod (141).

5. Device according to claim 4, wherein said shutter member (145) is constrained to a second end portion (141c) of said rod (141) opposite to said first end portion (141a).

6. Device according to any one of claims 1 to 3, wherein said shutter member (145) is separate from the rod (141) and is normally held by elastic means against said valve seat (116) to prevent the flow of the liquid from said first duct (111) to said first volume (121), and wherein said rod (141) is configured to push said shutter member (145) away from said valve seat (116) against the action of said elastic means.

7. Device according to claim 6, wherein said shutter member (145) and said rod (141) are arranged on opposite sides of said valve seat (116).

8. Device according to any one of the preceding claims, wherein said main body (110) comprises a second cylindrical portion (113), extending along the axis of translation (X) and having a threaded end (113a), wherein the actuator body (142) comprises a flange portion (142c) having a greater diameter than the internal diameter of said second cylindrical portion (113), and wherein the device further comprises a clamping ring nut (170) configured to be screwed to said threaded end (113a) so as to clamp said flange portion (142c) of the actuator body (142) against said threaded end (113a) in such a way that the actuator body (142) is blocked with respect to the main body (110), and second sealing means (171) interposed between the actuator body (142) and said threaded end (113a).

9. Device according to any one of the preceding claims, further comprising a check valve (160) arranged in said second duct (112) to allow the flow of the liquid through said second duct (112) only in the direction exiting the main body (110).

10. Device according to any one of the preceding claims, wherein said shutter member (145) is a plate provided with a gasket (145a).

## Patentansprüche

1. Vorrichtung (100) zum Filtern einer Flüssigkeit, insbesondere zum Filtern von Wasser in hydraulischen Kreisläufen von Heizungssystemen, umfassend:
- einen Grundkörper (110) mit einer ersten Durchführung (111) für den Eintritt der zu filtrierenden Flüssigkeit und mit einer zweiten Durchführung (112) für den Austritt der filtrierten Flüssigkeit, wobei der besagte Grundkörper (110) ferner einen hohlzylindrischen Bereich (120) umfasst;
- eine Filterpatrone (130), die in dem besagten hohlzylindrischen Bereich (120) aufgenommen ist, um so das eingeschlossene, von dem besagten hohlzylindrischen Bereich (120) umgrenzte Volumen zu unterteilen in ein erstes Volumen (121), das in einer Strömungsverbindung mit der besagten ersten Durchführung (111) steht, und in ein zweites Volumen (122), das in einer Strömungsverbindung mit der besagten zweiten Durchführung (112) steht;
- ein Ventilmittel (116, 145) zur Steuerung des Flüssigkeits-Durchflusses von der besagten ersten Durchführung (111) zu dem besagten ersten Volumen (121), wobei das besagte Ventilmittel (116, 145) einen Ventilsitz (116) aufweist, der zwischen der besagten ersten Durchführung (111) und dem besagten ersten Volumen (121) eingefügt ist, sowie ein Verschlusselement (145), das bezüglich des Ventilsitzes (116) beweglich ist zwischen einer geschlossenen Position und einer offenen Position, in welchen es den Flüssigkeits-Durchfluss von der besagten ersten Durchführung (111) zu dem besagten ersten Volumen (121) durch den besagten Ventilsitz (116) unterbricht bzw. zulässt;
- ein Aktuatormittel (140) zum Steuern der Bewegung des Verschlusselements (145) zwischen der besagten geschlossenen Position und der besagten offenen Position, wobei das besagte Aktuatormittel (140) eine Stange (141) aufweist, welche mit dem Verschlusselement (145) wirkungstechnisch verbunden ist und entlang einer Translationsachse (X) verschiebbar ist, die mit seiner Längsachse zusammenfällt, einen Aktuatorkörper (142), der an dem Grundkörper (110) befestigt und dazu ausgelegt ist, die besagte Stange (141) in ihrer translatorischen Bewegung entlang der besagten Translationsachse (X) zu führen, ferner einen Knauf (144), der dazu ausgelegt ist, von einem Anwender in Rotation versetzt zu werden, um die besagte Stange (141) zu bewegen, sowie einen Schaft (143), der für eine gemeinsame Rotation mit dem besagten Knauf (144) gekoppelt ist; und
- ein erstes Dichtungsmittel (147), das innerhalb des Aktuatorkörpers (142) angeordnet ist;
**dadurch gekennzeichnet,**
- **dass** die besagte Stange (141) bezüglich der Rotation um die besagte Translationsachse (X) blockiert ist und an einem ersten Endbereich (141a), welcher dem Verschlusselement (145) abgewandt ist, einen mit einem Gewinde versehen Hohlraum (141b) aufweist;
- **dass** der Schaft (143) einen Gewindebereich (143a) aufweist, der in den besagten Gewinde-Hohlraum (141b) der Stange (141) eingreift, derart, dass die Rotationsbewegung des Knaufs (144), und infolgedessen auch des Schaftes (143), in der einen Richtung oder der anderen, umgewandelt wird in eine translatorische Bewegung der Stange (141), in der einen Richtung oder der anderen, entlang der besagten Translationsachse (X); und
- **dass** das besagte erste Dichtungsmittel (147) wenigstens eine Dichtung umfasst, die an dem besagten Schaft (143) befestigt ist.

2. Vorrichtung gemäß Anspruch 1, wobei das besagte erste Dichtungsmittel (147) zwei Dichtungen aufweist, insbesondere zwei O-Dichtungsringe, welche auf dem besagten Schaft (143) angeordnet sind, um auf diese Weise axial voneinander beabstandet zu sein.

3. Vorrichtung gemäß Anspruch 1 oder 2, wobei der besagte erste Endbereich (141a) der Stange (141) einen polygonalen Querschnitt aufweist, der verschiebbar innerhalb einer entsprechenden polygonalen Aufnahme (142a) in dem Aktuatorkörper (142) aufgenommen ist, um auf diese Weise die Stange (141) von einer Rotation gegenüber dem Aktuatorkörper (142) abzuhalten.

4. Vorrichtung gemäß einem der vorhergehenden Ansprüche, wobei das besagte Verschlusselement (145) an der besagten Stange (141) antriebsmäßig angeschlossen ist.

5. Vorrichtung gemäß Anspruch 4, wobei das besagte Verschlusselement (145) an einem zweiten Endbereich (141c) der besagten Stange (141) festgelegt ist, welcher dem besagten ersten Endbereich (141a) gegenüber liegt.

6. Vorrichtung gemäß einem der Ansprüche 1 bis 3, wobei das besagte Verschlusselement (145) von der Stange (141) getrennt ist und normalerweise von einem elastischen Mittel gegen den besagten Ventilsitz (116) gehalten wird, um den Flüssigkeits-Durchfluss von der besagten ersten Durchführung (111) zu dem besagten ersten Volumen (121) zu verhindern, und wobei die besagte Stange (141) dazu ausgelegt ist, das besagte Verschlusselement (145) gegen die Wirkung des besagten elastischen Mittels von dem besagten Ventilsitz (116) weg zu drücken.

7. Vorrichtung gemäß Anspruch 6, wobei das besagte Verschlusselement (145) und die besagte Stange (141) an einander abgewandten Seiten des besagten Ventilsitzes (116) angeordnet sind.

8. Vorrichtung gemäß einem der vorhergehenden Ansprüche, wobei der besagte Grundkörper (110) einen zweiten zylindrischen Bereich (113) aufweist, der sich entlang der Translationsachse (X) erstreckt und ein mit einem Gewinde versehenes Ende (113) hat, wobei der Aktuatorkörper (142) einen Flanschbereich (142c) umfasst, der einen größeren Durchmesser aufweist als der innere Durchmesser des besagten zweiten zylindrischen Bereichs (113), und wobei die Vorrichtung ferner eine Klemmringmutter (170) umfasst, die dazu ausgelegt ist, auf das besagte, mit einem Gewinde versehene Ende (113a) aufgeschraubt zu werden, um so den besagten Flanschbereich (142c) des Aktuatorkörpers (142) gegen das besagte, mit Gewinde versehene Ende (113a) festzuklemmen, so dass der Aktuatorkörper (142) bezüglich des Grundkörpers (110) blockiert wird, wobei ein zweites Dichtungsmittel (171) zwischen dem Aktuatorkörper (142) und dem besagten Gewinde-Ende (113a) angeordnet ist.

9. Vorrichtung gemäß einem der vorhergehenden Ansprüche, ferner umfassend ein Rückschlagventil (160), das in der besagten zweiten Durchführung (112) angeordnet ist, um den Flüssigkeits-Durchfluss durch die besagte zweite Durchführung (112) nur in der aus dem Grundkörper (110) austretenden Richtung zuzulassen.

10. Vorrichtung gemäß einem der vorhergehenden Ansprüche, wobei das besagte Verschlusselement (145) eine mit einer Dichtung (145a) versehene Platte ist.

## Revendications

1. Dispositif (100) pour filtrer un liquide, en particulier pour filtrer de l'eau dans des circuits hydrauliques d'installations de chauffage, comprenant :
- un corps principal (110) ayant un premier conduit (111) pour l'entrée du liquide à filtrer et un second conduit (112) pour la sortie du liquide filtré, ledit corps principal (110) comprenant en outre une partie cylindrique creuse (120) ;
- une cartouche filtrante (130) logée dans ladite partie cylindrique creuse (120) afin de diviser un volume de confinement défini par ladite partie cylindrique creuse (120) en un premier volume (121), en communication de fluide avec ledit premier conduit (111) et en un second volume (122) en communication de fluide avec ledit second conduit (112) ;
- des moyens de valve (116, 145) pour contrôler le flux du liquide à partir dudit premier conduit (111) jusqu'audit premier volume (121), lesdits moyens de valve (116, 145) comprenant un siège de valve (116) intercalé entre ledit premier conduit (111) et ledit premier volume (121) et un élément obturateur (145) mobile par rapport audit siège de valve (116) entre une position fermée et une position ouverte, dans laquelle il interrompt et permet respectivement le flux du liquide dudit premier conduit (111) audit premier volume (121) par le biais dudit siège de valve (116) ;
- des moyens d'actionneur (140) pour commander le mouvement de l'élément obturateur (145) entre ladite position fermée et ladite position ouverte, dans lequel lesdits moyens d'actionneur (140) comprennent une tige (141) qui est opérationnellement associée avec l'élément obturateur (145) et peut effectuer une translation le long d'un axe de translation (X) coïncidant avec son axe longitudinal, un corps d'actionneur (142) qui est monté sur le corps principal (110) et est configuré pour guider ladite tige (141) dans son mouvement de translation le long dudit axe de translation (X), et un bouton (144) configuré pour être entraîné en rotation par un utilisateur pour déplacer ladite tige (141), et un arbre (143) raccordé, par entraînement, pour la rotation avec ledit bouton (144) ; et
- des premiers moyens d'étanchéité (147) agencés à l'intérieur du corps d'actionneur (142) ;
**caractérisé**
**en ce que** ladite tige (141) est bloquée par rapport à la rotation autour dudit axe de translation (X) et a, au niveau de sa première partie d'extrémité (141a) orientée à l'opposé de l'élément obturateur (145), une cavité filetée (141b) ;
**en ce que** l'arbre (143) comprend une partie filetée (143a) se mettant en prise dans ladite cavité filetée (141b) de la tige (141), de sorte que le mouvement de rotation du bouton (144) et par conséquent de l'arbre (143), dans une direction ou l'autre, est converti en un mouvement de translation de la tige (141), dans une direction ou l'autre, le long dudit axe de translation (X) ; et
**en ce que** lesdits premiers moyens d'étanchéité (147) comprennent au moins un joint monté sur ledit arbre (143).

2. Dispositif selon la revendication 1, dans lequel lesdits premiers moyens d'étanchéité (147) comprennent deux joints, en particulier deux joints toriques, agencés sur ledit arbre (143) afin d'être axialement espacés l'un de l'autre.

3. Dispositif selon la revendication 1 ou la revendication 2, dans lequel ladite première partie d'extrémité (141a) de la tige (141) a une section transversale polygonale logée, de manière coulissante, à l'intérieur d'un siège polygonal (142a) correspondant dans le corps d'actionneur (142) afin d'empêcher la tige (141) de tourner par rapport au corps d'actionneur (142).

4. Dispositif selon l'une quelconque des revendications précédentes, dans lequel ledit élément obturateur (145) est raccordé, par entraînement, avec ladite tige (141).

5. Dispositif selon la revendication 4, dans lequel ledit élément obturateur (145) est contraint à une seconde partie d'extrémité (141c) de ladite tige (141) opposée à ladite première partie d'extrémité (141a).

6. Dispositif selon l'une quelconque des revendications 1 à 3, dans lequel ledit élément obturateur (145) est séparé de la tige (141) et est normalement maintenu par des moyens élastiques contre ledit siège de valve (116) pour empêcher le flux du liquide dudit premier conduit (111) audit premier volume (121), et dans lequel ladite tige (141) est configurée pour pousser ledit élément obturateur (145) à l'opposé dudit siège de valve (116) contre l'action desdits moyens élastiques.

7. Dispositif selon la revendication 6, dans lequel ledit élément obturateur (145) et ladite tige (141) sont agencés sur les côtés opposés dudit siège de valve (116).

8. Dispositif selon l'une quelconque des revendications précédentes, dans lequel ledit corps principal (110) comprend une seconde partie cylindrique (113), s'étendant le long de l'axe de translation (X) et ayant une extrémité filetée (113a), dans lequel le corps d'actionneur (142) comprend une partie de bride (142c) ayant un plus grand diamètre que le diamètre interne de ladite seconde partie cylindrique (113), et dans lequel le dispositif comprend en outre un écrou de serrage (170) configuré pour être vissé sur ladite extrémité filetée (113a) afin de serrer ladite partie de bride (142c) du corps d'actionneur (142) contre ladite extrémité filetée (113a) de sorte que le corps d'actionneur (142) est bloqué par rapport au corps principal (110), et des seconds moyens d'étanchéité (171) intercalés entre le corps d'actionneur (142) et ladite extrémité filetée (113a).

9. Dispositif selon l'une quelconque des revendications précédentes, comprenant en outre un clapet antiretour (160) agencé dans ledit second conduit (112) pour permettre le flux du liquide à travers ledit second conduit (112) uniquement dans la direction en sortie du corps principal (110).

10. Dispositif selon l'une quelconque des revendications précédentes, dans lequel ledit élément obturateur (145) est une plaque munie d'un joint (145a).
